(19) Europäisches Patentamt / European Patent Office / Office européen des brevets

(11) **EP 2 384 910 A2**

(12) **DEMANDE DE BREVET EUROPEEN**

(43) Date de publication:
**09.11.2011 Bulletin 2011/45**

(21) Numéro de dépôt: **11171183.4**

(22) Date de dépôt: **15.01.2004**

(51) Int Cl.:
*B60C 19/00* (2006.01)  *B60B 21/02* (2006.01)
*B60C 15/024* (2006.01)  *B60C 15/06* (2006.01)
*B60C 15/00* (2006.01)  *B60C 9/02* (2006.01)

(84) Etats contractants désignés:
**AT BE BG CH CY CZ DE DK EE ES FI FR GB GR HU IE IT LI LU MC NL PT RO SE SI SK TR**

(30) Priorité: **17.01.2003  FR 0300688**
**14.08.2003  FR 0309974**

(62) Numéro(s) de document de la (des) demande(s) initiale(s) en application de l'article 76 CBE:
**04702316.3 / 1 601 541**

(71) Demandeurs:
• **Société de Technologie Michelin**
**63000 Clermont-Ferrand (FR)**

• **Michelin Recherche et Technique S.A.**
**1763 Granges-Paccot (CH)**

(72) Inventeur: **Monnerie, Christian**
**63040 CLERMONT-FERRAND Cedex 9 (FR)**

(74) Mandataire: **Le Cam, Véronique Marie Christine**
**23, place des Carmes-Déchaux**
**Clermont-Ferrand - Cédex 9, 63040 (FR)**

Remarques:
Cette demande a été déposée le 23-06-2011 comme demande divisionnaire de la demande mentionnée sous le code INID 62.

(54) **Ensembles montes pour avion, roues et pneumatiques**

(57) L'invention concerne les ensembles montés pour avion et les roues et les pneumatiques qui les constituent. Les ensembles montés pour avion concernés par l'invention se caractérisent notamment par la combinaison de pression de gonflage supérieure à 9 bars et d'une flèche relative du pneumatique supérieure à 30%, la roue comportant une jante de réception du pneumatique et plus spécifiquement des sièges recevant les bourrelets dudit pneumatique.

Selon l'invention, la jante comporte une fonctionnalité base creuse et est avantageusement de type monobloc.

FIG. 1

EP 2 384 910 A2

**Description**

L'invention concerne les ensembles montés pour avion et les roues et les pneumatiques qui les constituent. Les ensembles montés pour avion concernés par l'invention se caractérisent notamment par la combinaison de pression de gonflage supérieure à 9 bars et d'une flèche relative du pneumatique supérieure à 30%.

La flèche d'un pneumatique est définie par la déformation radiale du pneumatique, ou variation de la hauteur radiale, lorsque celui-ci passe d'un état non chargé à un état chargé en statique, dans des conditions de charge et de pression nominales.

Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le crochet. Le diamètre extérieur du pneumatique est mesuré en statique dans un état non chargé à la pression nominale.

L'armature de renforcement ou renforcement des pneumatiques et notamment des pneumatiques d'avion est à l'heure actuelle - et le plus souvent - constituée d'une nappe ou d'un empilage de plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de chacune des nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant solidarisé par un mélange caoutchouteux d'ancrage ou de liaison.

Il existe également des procédés d'assemblage sur noyau toroïdal utilisant des produits semi-finis, tels que des bandelettes, spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Dans ce qui suit, on entend par « axiale » une direction parallèle à l'axe de rotation du pneumatique ; cette direction peut être « axialement intérieure » lorsqu'elle est dirigée vers l'intérieur du pneumatique et « axialement extérieure » lorsqu'elle est dirigée vers l'extérieur du pneumatique.

On entend par « radiale » une direction perpendiculaire à l'axe de rotation du pneumatique et passant par cet axe de rotation. Cette direction peut être « radialement intérieure » ou « radialement extérieure » selon qu'elle se dirige vers l'axe de rotation ou vers l'extérieur du pneumatique.

On entend par « un élément de renforcement orienté radialement », un élément de renforcement contenu sensiblement dans un même plan axial.

On entend par « un élément de renforcement orienté circonférentiellement », un élément de renforcement orienté sensiblement parallèlement à la direction circonférentielle du pneumatique, c'est-à-dire faisant avec cette direction un angle ne s'écartant pas de plus de cinq degrés de la direction circonférentielle.

On entend par « élément de renforcement », aussi bien des mono filaments que des multifilaments, ou des assemblages comme des câbles, des retors ou bien encore n'importe quel type d'assemblage équivalent, et ceci, quels que soient la matière et le traitement de ces éléments de renforcements, par exemple traitement de surface ou enrobage ou pré encollage pour favoriser l'adhésion sur le caoutchouc.

On entend par « contact » entre un élément de renforcement et un mélange caoutchouteux d'ancrage, le fait que, au moins une partie de la circonférence extérieure de l'élément de renforcement est en contact intime avec le mélange caoutchouteux d'ancrage ; si un élément de renforcement comporte un revêtement ou un enrobage, le terme contact veut dire que c'est la circonférence extérieure de ce revêtement ou de cet enrobage qui est en contact intime avec le mélange caoutchouteux d'ancrage.

On entend par « module d'élasticité » d'un mélange caoutchouteux, un module sécant d'extension à 10 % de déformation et à température ambiante ; la mesure est réalisée après un premier cycle d'accommodation jusqu'à 10 % de déformation :  $- E_{10} = \dfrac{F_{10}}{S \times \varepsilon_{10}}$  i.e.  $E_{10} = \dfrac{F_{10}(1+\varepsilon_{10})}{S_0 \times \varepsilon_{10}}$  et  $E_{10} = \dfrac{F_{10} \times 1.1}{S_0 \times 0.1}$  dans laquelle $\varepsilon_{10}$ est égale à 0.1 ;

avec $E_{10}$ : module d'extension sécant à 10% de déformation ; $F_{10}$ : force d'extension à 10% d'extension ; $S_0$: section initiale de l'éprouvette de test ; $S$ : section de l'éprouvette de test à la déformation d'extension $\varepsilon$, dans le cas de matériau en caoutchouc, on sait que :  $S = \dfrac{S_0}{1+\varepsilon}$ ; et $\varepsilon_{10}$ : déformation d'extension à 10%. Les mesures de module d'élasticité d'un

mélange caoutchouteux sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

On entend par « Tg » d'un élastomère, la température de transition vitreuse de celui-ci mesurée par analyse thermique différentielle.

On entend par « test de fluage statique », un test dans lequel on prépare des éprouvettes dont la partie utile a une longueur de 70mm, une largeur de 5 mm et une épaisseur de 2,5 mm (ces éprouvettes sont découpées dans des plaques vulcanisées d'épaisseur 2,5 mm) ; on met en place les éprouvettes dans une étuve à 150°C et on leur accroche immédiatement une masse de 3 kg ; le test s'effectue ainsi avec une contrainte initiale de :

$$\sigma_0 = \frac{Mg}{S_0} = 2,35 MPa$$

avec M : masse appliquée, g : accélération de la pesanteur et $S_0$ section initiale de l'éprouvette de mesure ; on mesure en fonction du temps l'allongement de la partie utile de l'éprouvette ; le « taux de fluage statique » correspond à la variation de déformation dans un temps donné, par exemple entre 3 et 5 heures de test :

$$\tau = \frac{\Delta\varepsilon}{\Delta t}$$

avec : $\Delta\varepsilon = \varepsilon(t_2) - \varepsilon(t_1)$ variation de la déformation mesurée pendant $\Delta t = t_2 - t_1$ en minutes (mn).

On entend par « test de rhéométrie », un test de cisaillement alterné à une déformation de $\pm$ 0,2 degrés, une fréquence de 100 cycles/mn, une température de 197°C et une durée de 10 mn ; rhéomètre de la société Monsanto ; le test est effectué sur un disque de mélange cru, on enregistre l'évolution pendant les 10 mn, du couple résultant du cisaillement imposé entre les deux faces du disque ; on note particulièrement ici l'évolution du couple après le maximum mesuré ; si le couple mesuré reste stable, il n'y a pas de réversion, c'est-à-dire de diminution de la raideur de l'éprouvette, si le couple mesuré diminue, on indique qu'il y a une réversion ; le phénomène de réversion traduit une diminution de la rigidité de l'éprouvette dans les conditions du test ; c'est un test de la stabilité thermique du mélange à haute température ; on note :

$$r = \frac{C_{\max} - C_{10}}{C_{\max}} \times 100$$

le taux de réversion à l'issue du test ; $C_{\max}$ est le couple maximum mesuré et $C_{10}$ est le couple mesuré après 10 mn de test.

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

En ce qui concerne les fils ou câbles textiles, les propriétés mécaniques sont mesurées sur des fibres ayant été soumises à un conditionnement préalable. Par "conditionnement préalable", on entend le stockage des fibres pendant au moins 24 heures, avant mesure, dans une atmosphère standard selon la norme européenne DIN EN 20139 (température de 20 $\pm$ 2°C ; hygrométrie de 65 $\pm$ 2 %). Les propriétés mécaniques en extension (ténacité, module, allongement et énergie à la rupture) sont mesurées de manière connue à l'aide d'une machine de traction ZWICK GmbH & Co (Allemagne) de type 1435 ou de type 1445. Les fibres, après avoir reçu une faible torsion de protection préalable (angle d'hélice de 6° environ), subissent une traction sur une longueur initiale de 400 mm à une vitesse nominale de 200 mm/min. Tous les résultats sont une moyenne de 10 mesures.

Les pneumatiques peuvent comme énoncé précédemment adopter différents types de construction.

Le brevet US 4,832,102 décrit par exemple un pneumatique d'avion comprenant un sommet, deux flancs et deux bourrelets, une armature de carcasse et une armature de sommet dans lequel l'armature de carcasse comprend deux alignements circonférentiels de renforts de haut module d'élasticité, ancrés dans les deux bourrelets, et l'armature de sommet comprend au moins un bloc de travail avec au moins une nappe de renforts de haut module d'élasticité. L'armature de carcasse est ancrée dans les bourrelets par le retournement, autour d'une tringle, des deux alignements circonférentiels de premiers renforts de haut module d'élasticité.

Le brevet WO 02/00456 décrit un autre type de pneumatiques pour avion dont l'armature de carcasse comprend deux ou trois alignements circonférentiels d'éléments de renforcement de haut module d'élasticité et des moyens d'ancrage desdits éléments de renforcement, constituant l'armature de carcasse, dans chaque bourrelet. Les moyens d'ancrage selon ce document sont constitués de fils orientés circonférentiellement bordant axialement les alignements circonférentiels des éléments de renforcement de l'armature de carcasse, lesdits éléments de renforcement de l'armature de carcasse et les fils orientés circonférentiellement étant séparés par un mélange caoutchouteux de liaison de très haut module d'élasticité. L'utilisation de fils, permet d'obtenir une rigidité satisfaisante avec un encombrement du bourrelet le plus réduit possible ; la compacité du bourrelet est primordiale pour les pneumatiques avion pour réduire les conséquences de l'échauffement desdits bourrelets.

Les pneumatiques pour avion doivent résister à des conditions en service extrêmes, notamment en termes de charge appliquée et de vitesse compte tenu de leur masse et de leur taille faibles. Il en résulte, en dépit de leurs pressions de gonflage très élevées, supérieures à 9 bars, que leur écrasement ou flèche en service peut atteindre couramment des valeurs doubles de celles observées pour des pneumatiques poids lourds ou de tourisme.

Lors des décollages, des vitesses très élevées, de l'ordre de 350 km/heure voire 450 km/heure, sont atteintes d'où des conditions d'échauffement aussi très sévères.

Toutes ces conditions sont particulièrement pénalisantes pour l'endurance des bourrelets de ces pneumatiques.

Ces conditions sont également contraignantes quant à la tenue des pneumatiques sur la jante. Elles ont conduit jusqu'à présent à des pneumatiques comportant une zone basse ou zone du bourrelet extrêmement rigide qui permet une bonne tenue sur ladite jante. Cette rigidité de la zone basse du pneumatique nécessite en conséquence des jantes en plusieurs parties qui autorisent le montage et le démontage des pneumatiques d'avion.

Par ailleurs, les ensembles montés ainsi réalisés pour avion nécessitent des examens stricts, rigoureux et fréquents. Ces contrôles peuvent s'accompagner d'un démontage de l'ensemble monté et d'une dissociation de la roue et du pneumatique. Ces opérations techniques sont longues et nécessitent l'intervention d'une main d'oeuvre hautement qualifiée.

L'invention a notamment pour but un ensemble monté pour avion qui facilite ces contrôles techniques et plus particulièrement qui facilite le démontage et remontage des ensembles montés au cours de la durée de vie d'un pneumatique d'avion.

Ce but a été atteint selon un aspect de l'invention par un ensemble monté pour avion constitué d'une roue et d'un pneumatique comportant notamment des bourrelets, dont la pression de gonflage est supérieure à 9 bars et dont la flèche relative est supérieure à 30%, ladite roue comportant une jante de réception du pneumatique et plus spécifiquement des sièges recevant les bourrelets dudit pneumatique, ladite jante comportant une fonctionnalité base creuse.

Selon un mode de réalisation préféré de l'invention, la jante est de type monobloc.

Une fonctionnalité base creuse doit être comprise comme signifiant que la roue comporte une structure conférant une fonctionnalité comparable à celle d'une base creuse d'une jante monobloc usuelle pour d'autres applications que celles de l'avion ; la fonction d'une base creuse est notamment d'autoriser le montage d'un pneumatique en combinaison avec une certaine déformation des bourrelets de celui-ci. Ce mode de montage est tout à fait classique dans des applications autres que celles de l'avion. Dans ces autres applications, il est usuel, pour le montage d'un pneumatique sur une roue monobloc, de prévoir dans la partie située entre les sièges de la roue une zone en renfoncement ou base creuse qui permet de recevoir successivement une partie de chacun des bourrelets du pneumatique pour en assurer le montage.

Les bourrelets du pneumatique de l'ensemble monté selon l'invention sont avantageusement ovalisables, c'est-à-dire déformables dans leur plan, de préférence sous des efforts acceptables industriellement.

De préférence encore, les bourrelets du pneumatique de l'ensemble monté selon l'invention peuvent être gauchis, c'est-à-dire dont le périmètre est déformable selon la direction axiale.

La demanderesse a constaté que l'on pouvait en agissant sur certains critères réaliser également des ensembles montés pour avion dont les pneumatiques se prêtent au montage sur une jante comportant une fonctionnalité base creuse.

Il a ainsi été obtenu de manière inattendue un ensemble monté pour avion constitué d'un pneumatique et d'une roue et plus spécifiquement d'une jante comportant une fonctionnalité base creuse avantageusement de type monobloc, sans sacrifier notamment l'endurance du pneumatique et le serrage dudit pneumatique sur la jante. Cette réalisation est notamment surprenante si l'on veut bien se rappeler que la technologie de montage de pneumatiques sur jantes monobloc, classique dans toutes les catégories de véhicules terrestres depuis de nombreuses années, ne s'est jamais appliquée dans le domaine des avions, malgré l'extension considérable de ce mode de transport.

Les montage et démontage des ensembles montés selon l'invention peuvent ainsi être réalisés de manière plus simple et plus rapide que lorsqu'il s'agit d'une roue constituée de plusieurs parties. En effet, les outils et les compétences requis pour ces opérations sont plus simples que selon les montages et démontages usuellement pratiqués. Cela présente bien entendu des avantages économiques de différents ordres en ce qui concerne les moyens directs de mise en oeuvre et la main d'oeuvre et sa formation nécessaires.

En outre, la possibilité de monter un pneumatique pour avion sur une roue de type monobloc peut permettre de constituer un ensemble monté selon l'invention dont la masse est sensiblement inférieure à la masse d'un ensemble monté usuel dont la roue est constituée de plusieurs parties. Cela peut encore conduire à des avantages économiques substantiels, le gain en masse de l'ensemble monté pouvant se traduire par une augmentation de la masse transportable ou par une diminution de la consommation de carburant de l'avion.

Le procédé de montage usuel d'un pneumatique tubeless sur une jante monobloc comportant une base creuse pour des applications autres que les applications avion consiste en différentes étapes qui sont les suivantes ; on commence par faire passer une partie du premier bourrelet par-dessus le rebord de jante et on place cette partie dans la base creuse. On peut alors faire passer le reste du bourrelet par-dessus le rebord grâce à une légère ovalisation du bourrelet correspondant du pneumatique. Il en est de même pour faire passer le second bourrelet par-dessus le rebord de la jante. Le montage est ensuite terminé par une étape finale de gonflage à une pression telle qu'elle assure la mise en place des bourrelets sur les sièges en appui sur les rebords de jante. Durant cette dernière étape les bourrelets peuvent franchir des humps qui forment un obstacle au passage desdits bourrelets jusqu'à leur siège respectif et préviennent ensuite les risques de déjantage.

L'invention prévoit que cette fonctionnalité base creuse peut être rempli par exemple par une zone en renfoncement limitée sur la périphérie de la roue ou encore par une ou plusieurs ouvertures limitées sur la périphérie de la roue. Dans ce dernier cas de réalisation, l'invention prévoit avantageusement que le système de freinage s'intègre dans la roue en venant obturer la ou lesdites ouvertures. Cette obturation de la ou des ouvertures peut permettre de jouer le rôle de dispositif anti-déjantage ; en effet l'obturation de la ou des ouvertures fait disparaître la fonctionnalité base creuse nécessaire au démontage du pneumatique ou à son déjantage. Un tel système peut donc éventuellement permettre de ne pas avoir de humps.

De la même façon, l'invention prévoit que les ouvertures assurant la fonctionnalité base creuse peuvent être obturées par tous moyens connus de l'homme du métier dès lors qu'elles ont rempli leur fonction lors du montage du pneumatique.

L'invention prévoit encore que les moyens assurant la fonctionnalité base creuse peuvent constituer une partie du dispositif de freinage qui vient s'intégrer à l'intérieur de la roue.

Selon un mode de réalisation avantageux de l'invention, les sièges de la jante de la roue de l'ensemble monté présentent une pente de 5°.

Selon un autre mode de réalisation de l'invention, les sièges de la jante de la roue de l'ensemble monté présentent une pente supérieure à 5° et de préférence inférieure à 15°.

Selon ces derniers modes de réalisation de l'invention, selon lesquels les sièges de la jante présentent une pente, l'endurance des bourrelets du pneumatique peut être améliorée.

Une première variante de réalisation de l'invention prévoit avantageusement que, le pneumatique comprenant un sommet, deux flancs et deux bourrelets, une armature de carcasse ancrée dans les deux bourrelets et une armature de sommet, dans lequel l'armature de carcasse comprend au moins un alignement circonférentiel d'éléments de renforcement et dans lequel les moyens d'ancrage desdits éléments de renforcement dans chaque bourrelet comprennent au moins un élément de renforcement orienté circonférentiellement, l'armature de carcasse du pneumatique comporte au moins une couche d'éléments de renforcement présentant une zone de retournement autour d'au moins un élément de renforcement orienté circonférentiellement.

Selon cette première variante de réalisation de l'invention, l'ensemble monté comporte un pneumatique d'avion dans lequel l'armature de carcasse est ancrée dans les bourrelets par retournement autour d'au moins un élément de renforcement orienté circonférentiellement, tel qu'une tringle.

Une seconde variante de réalisation de l'invention prévoit avantageusement que, le pneumatique comprenant un sommet, deux flancs et deux bourrelets, une armature de carcasse ancrée dans les deux bourrelets et une armature de sommet, dans lequel l'armature de carcasse comprend au moins un alignement circonférentiel d'éléments de renforcement et dans lequel les moyens d'ancrage desdits éléments de renforcement dans chaque bourrelet comprennent au moins un élément de renforcement orienté circonférentiellement, les moyens d'ancrage desdits éléments de renforcement dans chaque bourrelet du pneumatique comprennent des éléments de renforcement orientés circonférentiellement bordant axialement lesdits alignements circonférentiels desdits éléments de renforcement de l'armature de carcasse.

L'invention propose également une roue pour avion comportant une jante de réception d'un pneumatique, comportant notamment des bourrelets, et plus spécifiquement des sièges recevant les bourrelets dudit pneumatique, la pression de gonflage de l'ensemble monté constitué de la roue et dudit pneumatique étant supérieure à 9 bars et dont la flèche relative est supérieure à 30%, ladite jante comportant une fonctionnalité base creuse.

De préférence, la jante de la roue selon l'invention est de type monobloc.

Comme énoncé précédemment, selon un premier mode de réalisation de l'invention les sièges de la jante de la roue présentent une pente de 5°.

Selon un autre mode de réalisation de l'invention, les sièges de la jante de la roue présentent une pente supérieure à 5° et de préférence inférieure à 15°.

L'invention propose également un pneumatique d'avion, dont la pression de gonflage est supérieure à 9 bars et dont la flèche relative est supérieure à 30%, comprenant un sommet, deux flancs et deux bourrelets, une armature de carcasse ancrée dans les deux bourrelets et une armature de sommet, dans lequel l'armature de carcasse comprend au moins un, et de préférence au moins deux, alignements circonférentiels d'éléments de renforcement et dans lequel les moyens d'ancrage desdits éléments de renforcement dans chaque bourrelet comprennent au moins un élément de renforcement orienté circonférentiellement, les bourrelets du pneumatique étant ovalisables, c'est-à-dire déformables dans leur plan, de préférence sous des efforts acceptables industriellement.

De préférence encore, les bourrelets du pneumatique peuvent être gauchis, c'est-à-dire dont le périmètre est déformable selon la direction axiale.

L'invention propose encore un pneumatique d'avion, dont la pression de gonflage est supérieure à 9 bars et dont la flèche relative est supérieure à 30%, comprenant un sommet, deux flancs et deux bourrelets, une armature de carcasse ancrée dans les deux bourrelets et une armature de sommet, dans lequel l'armature de carcasse comprend au moins un, et de préférence au moins deux, alignements circonférentiels d'éléments de renforcement et dans lequel les moyens d'ancrage desdits éléments de renforcement dans chaque bourrelet comprennent au moins un élément de renforcement orienté circonférentiellement, et au moins un mélange caoutchouteux d'ancrage en contact avec le renfort circonférentiel et les éléments de renforcement de l'armature de carcasse, le mélange caoutchouteux présentant un module d'élasticité, à une déformation de 10%, inférieur à 20 MPa.

Le pneumatique ainsi défini selon l'invention présente des bourrelets dont la rigidité inférieure par rapport aux pneumatiques d'avion usuellement réalisés permet de faciliter le montage et le démontage dudit pneumatique d'avion. De façon surprenante, la demanderesse a constaté que ce mélange caoutchouteux d'ancrage permettait, en dépit de sa rigidité très inférieure à ce qui était préconisé précédemment, de conserver des caractéristiques notamment en endurance des bourrelets concernés très satisfaisantes.

Selon une variante préférée de réalisation, le mélange caoutchouteux d'ancrage comporte au moins un élastomère synthétique compris dans le groupe des « SBR », ou copolymère de butabiène-styrène, et des « BR », ou polybutadiènes, avec une proportion totale d'élastomère synthétique supérieure à 50 % de la masse totale d'élastomères.

De préférence, la proportion totale d'élastomère synthétique est comprise entre 55 et 65 % de la masse totale d'élastomères.

Au-dessus de 65 %, le collant à cru des gommes de liaison devient insuffisant et cela pose des problèmes de confection des bourrelets des pneumatiques, en revanche, en dessous de 55 %, la résistance des mélanges caoutchouteux d'ancrage à une sollicitation de fluage statique à température élevée se dégrade.

Le mélange caoutchouteux d'ancrage comporte, de préférence, un SBR de Tg comprise entre -70° et -25°C avec une proportion en masse supérieure à 20 % de la masse totale d'élastomères.

Il peut aussi comporter un BR de Tg comprise entre -110° et -90 °C avec une proportion en masse inférieure à 40 % de la masse totale d'élastomères.

En effet, la présence de BR améliore la stabilité thermique du mélange caoutchouteux d'ancrage à haute température toutefois, au-delà de 40 % de la masse totale d'élastomères, le mélange caoutchouteux d'ancrage devient difficile à réaliser.

Selon une réalisation avantageuse, le mélange caoutchouteux d'ancrage supporte sans rompre une sollicitation de fluage statique à 150°C sous une contrainte initiale de 2,35 MPa pendant au moins 5 heures.

De préférence, le mélange caoutchouteux d'ancrage a un taux de fluage statique à 150°C sous une contrainte initiale de 2,35 MPa inférieur à $2.10^{-3}$/mn entre 3 et 5 heures de sollicitation.

De préférence, ledit mélange caoutchouteux d'ancrage a un taux de réversion après 10 mn à 197°C inférieur à 10 % et de préférence inférieur à 5 %.

Selon un premier mode de réalisation de l'invention, celle-ci s'applique à un pneumatique d'avion dans lequel l'armature de carcasse du pneumatique comporte au moins une couche d'éléments de renforcement présentant une zone de retournement autour d'au moins un élément de renforcement orienté circonférentiellement, tel qu'une tringle.

Selon ce premier mode de réalisation, il est apparu que le mélange caoutchouteux selon l'invention permet de conférer comme énoncé précédemment une certaine souplesse au bourrelet qui facilite le montage et le démontage du pneumatique.

Avantageusement encore selon ce premier mode de réalisation, lorsque l'armature de carcasse est retournée autour d'une tringle, le mélange caoutchouteux est avantageusement présent, outre la zone entre la tringle et l'armature de carcasse, au sein de la tringle, entre les différents éléments de renforcement constituant celle-ci. Pour certains types de pneumatique, il peut encore être avantageusement prévu de subdiviser la ou les tringles pour augmenter la proportion de mélange caoutchouteux selon l'invention par rapport à la proportion d'élément de renforcement dans une zone donnée. Cela peut se traduire par la présence de nombreuses subdivisions de tringles disposées de manière organisée ou non. La ou les tringles peuvent être constituées de fils ou de câbles choisis dans le groupe des renforts de carbone, de tungstène, d'aramide, des fibres de verre, ou d'acier.

Selon un second mode de réalisation de l'invention, celle-ci s'applique à un pneumatique d'avion dans lequel l'armature de carcasse est ancrée dans les bourrelets au moyen d'éléments de renforcement orientés circonférentiellement bordant axialement lesdits éléments de renforcement de l'armature de carcasse.

Selon ce second mode de réalisation, dans lequel l'ancrage de l'armature de carcasse et les éléments de renforcement circonférentiels est obtenu par un mélange caoutchouteux d'ancrage, il est apparu que ledit mélange caoutchouteux selon l'invention apporte une souplesse suffisante pour améliorer les conditions de montage et démontage de pneumatiques d'avion sur leurs roues.

Conformément à ce second mode de réalisation, l'invention prévoit avantageusement que les éléments de renforcement circonférentiels sont des câbles.

De préférence, lesdits câbles présentent une aptitude à la pénétration comprise entre 80 et 100%, la force rupture desdits câbles étant supérieure à 150 daN et lesdits câbles présentant un allongement à la rupture supérieur à 4%.

L'utilisation de câbles permet d'améliorer et de faciliter la fabrication des pneumatiques selon l'invention selon des technologies de fabrication du type sur noyau toroïdal. La demanderesse a constaté que le fait de remplacer, dans le pneumatique selon l'invention, un ancrage de l'armature de carcasse au moyen de fils circonférentiels couplés aux éléments de renforcement de l'armature de la carcasse par l'intermédiaire d'un mélange caoutchouteux d'ancrage, par un ancrage au moyen de câbles tels que définis précédemment permet d'améliorer le rendement du procédé de fabrication. En outre, il apparaît que l'utilisation des câbles définis selon l'invention permet de conserver une compacité des bourrelets du pneumatique pour une rigidité satisfaisante pour les applications considérées.

En effet, il apparaît que le choix de câbles présentant une aptitude à la pénétration telle que décrite autorise un accrochage à cru des câbles dans la zone du bourrelet de manière satisfaisante sans risque de voir les dits câbles se détacher même partiellement durant les étapes de fabrication du pneumatique ultérieure qui sont réalisées avant la cuisson dudit pneumatique.

En outre, l'utilisation de câbles comme éléments de renforcement circonférentiels selon ce second mode de réalisation de l'invention autorise un gauchissement des bourrelets du pneumatique ou déformation du périmètre selon la direction axiale. Une telle déformation favorise encore davantage le montage et le démontage de pneumatique d'avion selon l'invention. Une telle déformation autorise en outre, dans des conditions très simples, le montage et démontage de pneumatiques sur des jantes monoblocs, c'est-à-dire en une seule partie.

L'utilisation d'une tringle, selon le premier mode de réalisation de l'invention, constituées de fils ou de câbles, associée à un mélange caoutchouteux selon l'invention présent dans la zone entre la tringle et l'armature de carcasse et/ou au sein de la tringle, entre les différents éléments de renforcement la constituant, autorise également le montage et démontage de pneumatiques sur des jantes monoblocs. De telles opérations nécessitent toutefois des efforts plus importants que dans le cas évoqué précédemment selon le second mode de réalisation de l'invention.

L'aptitude à la pénétration selon l'invention est l'aptitude que présente la gomme à pénétrer les zones libres d'un câble, c'est-à-dire les zones ne comportant pas de matière ; elle est exprimée en pourcentage desdites zones libres occupées par de la gomme après cuisson et déterminée par un test de perméabilité à l'air.

Ce test de perméabilité à l'air permet de mesurer un indice relatif de perméabilité à l'air. Il constitue un moyen simple de mesure indirecte du taux de pénétration du câble par une composition de caoutchouc. Il est réalisé sur des câbles extraits directement, par décorticage, des nappes de caoutchouc vulcanisées qu'ils renforcent, donc pénétrés par le caoutchouc cuit.

Le test est réalisé sur une longueur de câble déterminée (par exemple 2 cm) de la manière suivante : on envoie de l'air à l'entrée du câble, sous une pression donnée (par exemple 1 bar), et on mesure la quantité d'air à la sortie, à l'aide d'un débitmètre ; pendant la mesure l'échantillon de câble est bloqué dans un joint étanche de telle manière que seule la quantité d'air traversant le câble d'une extrémité à l'autre, selon son axe longitudinal, est prise en compte par la mesure. Le débit mesuré est d'autant plus faible que le taux de pénétration du câble par le caoutchouc est élevé.

Les valeurs d'allongement à la rupture selon l'invention autorisent une optimisation de l'efficacité du travail des câbles. En effet, selon les techniques de fabrication sur noyau toroïdal, les câbles sont enroulés circonférentiellement pour former plusieurs spires radialement concentriques ou hélicoïdales autorisant un meilleur ancrage entre les câbles et les éléments de renforcement de l'armature de carcasse. Les valeurs d'allongement à rupture des câbles selon l'invention autorisent une déformation desdits câbles qui conduit à un rendement d'efficacité desdites spires plus important. En d'autres termes, la déformation desdits câbles selon l'invention permet d'obtenir une répartition plus homogène, selon la longueur d'enroulement, des contraintes supportées par un même enroulement d'un tel câble qui ne présente pas lesdites caractéristiques d'allongement.

En conséquence, la combinaison de l'allongement à la rupture des câbles et de leur force rupture selon l'invention permet de conserver une compacité du bourrelet satisfaisante pour les applications visées.

Selon une réalisation préférée de l'invention, la force rupture des câbles est inférieure à 400 daN. Une force rupture supérieure à une telle valeur peut conduire, notamment dans le cas d'une valeur de force rupture globale du bourrelet fixée et d'un diamètre de câbles imposés, à une diminution du nombre de tours desdits câbles et donc à une diminution de la hauteur d'ancrage entre les éléments de renforcement de la structure de carcasse et des câbles orientés circonférentiellement. Une telle diminution de la hauteur d'ancrage peut être préjudiciable à la qualité dudit ancrage. Par ailleurs, si l'augmentation de la force rupture des câbles est combinée à une augmentation du diamètre desdits câbles, cela peut engendrer des problèmes d'encombrement notamment en terme d'élargissement de la zone basse.

De préférence encore, l'allongement à la rupture des câbles est inférieur à 8%. Un allongement supérieur pourrait conduire à des pneumatiques dont la rigidité des bourrelets, pour des pressions élevées, n'est pas suffisante pour garantir la tenue dudit pneumatique sur une jante et pour garantir la transmission des couples freineurs.

Les valeurs d'allongement à la rupture des câbles selon l'invention sont avantageusement obtenues par des traitements thermiques des câbles qualifiés de traitement « grand allongement ». De tels traitements connus de l'homme du métier sont par exemple décrits dans le brevet européen EP 0 751 015.

Selon un mode de réalisation avantageux de l'invention, les câbles selon l'invention comportent un revêtement adhérisant classique tel qu'un revêtement en laiton de façon à améliorer l'adhérence entre lesdits câbles et les mélanges caoutchouteux.

Les câbles orientés circonférentiellement ont, de préférence, un module d'extension supérieur à celui des éléments de renforcement de l'armature de carcasse. Ils sont préférentiellement choisis dans le groupe des renforts de carbone, de tungstène, d'aramide, de fibre de verre, ou d'acier.

Selon une autre caractéristique du pneumatique selon l'invention, en considérant $\sum R_l$ somme des rigidités d'extension des câbles orientés circonférentiellement disposés axialement intérieurement relativement à l'armature de carcasse et en considérant $\Sigma R_E$ somme des rigidités d'extension des câbles orientés circonférentiellement disposés axialement de part et d'autre de l'armature de carcasse, on a :

$$0,6 \le \frac{\sum R_I}{\sum R_E} \le 1,5$$

et de préférence :

$$0,7 \le \frac{\sum R_I}{\sum R_E} \le 1,3$$

Le respect de ces limites pour le rapport entre la rigidité totale d'extension des câbles orientés circonférentiellement disposés à l'intérieur de l'armature de carcasse dans chaque bourrelet et la rigidité totale d'extension des câbles orientés circonférentiellement disposés à l'extérieur de l'armature de carcasse a l'avantage de rendre plus homogène la sollicitation des câbles orientés circonférentiellement dans le bourrelet, quelle que soit leur position.

Selon une réalisation préférée de l'invention, la surface extérieure du bourrelet du pneumatique selon l'invention comportant un siège suivi d'une paroi tronconique d'orientation sensiblement radiale adjacente radialement intérieurement à une paroi de section droite sensiblement en arc de cercle et de centre C disposé extérieurement relativement au bourrelet, ces parois étant destinées à s'appuyer contre le crochet et le rebord d'une jante adaptée, en considérant une ligne CD, traversant le bourrelet du pneumatique en faisant un angle $\alpha$ = +45 $\pm$ 5 degrés relativement à l'axe A du pneumatique, l'ensemble des câbles orientés circonférentiellement est disposé à une distance radiale de l'axe du pneumatique inférieure ou égale à cette ligne CD. Cette ligne CD définit sensiblement une zone d'encastrement, très rigide, où les déformations sont très réduites et une zone de flexion radialement au-dessus de CD. Le fait que tous les câbles orientés circonférentiellement se trouvent dans la zone d'encastrement renforce l'endurance du bourrelet.

De préférence, le bourrelet du pneumatique selon l'invention ayant une surface extérieure destinée à venir en contact avec la surface correspondante du siège et du crochet de la jante, après montage sur ladite jante et gonflage du pneumatique, la zone de contact entre la surface extérieure du bourrelet et la jante s'étend au moins jusqu'au point B du crochet de rayon maximum $R_J$.

Avantageusement, $\Phi$ étant le diamètre de la circonférence de la surface extérieure du bourrelet destinée à venir s'appuyer contre la circonférence du crochet de la jante de rayon maximum $R_J$, on a :

$$\Phi = 2(R_J - \varepsilon)$$

avec $\varepsilon$ compris entre 0,5 et 2 mm.

Cela permet au bourrelet de bien venir « s'asseoir » sur le siège et le crochet de la jante et a pour avantage de limiter la courbure prise par les alignements circonférentiels de l'armature de carcasse lors du roulage, particulièrement dans l'aire de contact.

Selon l'invention, les éléments de renforcement constituant l'armature de carcasse peuvent être tout type d'éléments de renforcement sous forme filaire, susceptible de renforcer une matrice déterminée, par exemple une matrice de caoutchouc. A titre d'éléments de renforcement, on citera par exemple des fibres multifilamentaires (« multifilament yarns »), ces fibres pouvant être tordues ou non sur elles-mêmes, des fils unitaires tels que des monofils cylindriques ou oblongs, avec ou sans torsion sur eux-mêmes, des câblés ou des retors (« cords ») obtenus par des opérations de câblage ou retordage de ces fils unitaires ou de ces fibres, de tels éléments de renforcement pouvant être hybrides, c'est-à-dire composites, comportant des éléments de natures différentes.

On entend par « retors » (« plied yam » ou « folded yarn ») un élément de renforcement constitué par deux brins (« single yarns ») ou plus assemblés ensemble par des opérations de retordage ; ces brins, généralement formés de fibres multifilamentaires, sont d'abord retordus individuellement dans un sens (direction de torsion S ou Z) au cours d'une première étape de retordage, puis tordus ensemble en sens inverse (direction de torsion Z ou S, respectivement) au cours d'une seconde étape de retordage.

Selon une réalisation avantageuse de l'invention, les éléments de renforcement constituant l'armature de carcasse sont, par exemples, constitués de polyamide aromatique ou d'éléments de renforcement tels que ceux décrits dans la demande de brevet WO 02/085646. Il peut s'agir de fils ou de câbles.

Avantageusement encore, l'armature de carcasse des pneumatiques selon l'invention comprend deux ou trois alignements circonférentiels d'éléments de renforcement par exemple.

De façon avantageuse, plus spécifiquement en ce qui concerne les pneumatiques réalisés sur noyau dur, chaque alignement circonférentiel de l'armature de carcasse est, dans chaque bourrelet, bordé axialement intérieurement et axialement extérieurement par des câbles orientés circonférentiellement.

Selon un mode de réalisation avantageux, concernant encore plus spécifiquement les pneumatiques réalisés sur noyau dur, les éléments de renforcement de l'armature de carcasse forment des allers et retours disposés de façon adjacente, avec, au niveau de chaque bourrelet, des boucles reliant chaque fois un aller à un retour.

Dans des variantes de réalisation de l'invention, l'armature de sommet du pneumatique pour avion selon l'invention comprend de préférence au moins un bloc de travail avec une ou plusieurs couches d'éléments de renforcement parallèles dans chaque couche, orientés sensiblement circonférentiellement ; il s'agit avantageusement d'éléments de renforcement constitués de polyamide aromatique, ou d'éléments de renforcement tels que ceux décrits dans la demande de brevet WO 02/085646.

Si nécessaire, l'armature de sommet comprenant une zone centrale et deux zones latérales, le bloc de travail comprend en plus au moins deux couches d'éléments de renforcement, orientés sensiblement circonférentiellement, disposées axialement de part et d'autre du plan médian du pneumatique dans les zones latérales dudit sommet. Ces couches permettent de supporter les efforts dus à la centrifugation à haute vitesse. Elles sont de préférence disposées radialement intérieurement relativement aux deux couches d'éléments de renforcement orientés circonférentiellement du bloc de travail. Ces deux couches de renforcement ont l'avantage d'augmenter le frettage des zones latérales du sommet sans augmenter son épaisseur.

L'armature de sommet peut encore comprendre en plus au moins deux couches d'éléments de renforcement, parallèles entre eux dans chaque couche et croisés d'une couche à la suivante en faisant avec la direction circonférentielle un angle $\alpha$, compris entre 5° et 35° pour renforcer la rigidité de dérive du pneumatique. Les éléments de renforcement sont par exemple des éléments de renforcement tels que ceux décrits dans la demande de brevet WO 02/085646.

L'armature de sommet peut aussi comprendre, disposée radialement extérieurement relativement au bloc de travail, une couche sommet de protection. Cette couche de protection s'étend de préférence axialement au-delà de la largeur axiale des couches d'éléments de renforcement d'orientation circonférentielle.

Comme énoncé ci-dessus, le pneumatique d'avion selon l'invention est particulièrement intéressant pour constituer un ensemble monté avec une roue de type monobloc. En effet, la déformation possible des bourrelets du pneumatique permet notamment d'assurer le montage et le démontage du pneumatique sur une telle roue. En outre, ces montage et démontage peuvent être réalisés de manière plus simple et plus rapide que lorsqu'il s'agit d'une roue constituée de plusieurs parties. Cela présente des avantages économiques de différents ordres notamment en ce qui concerne les moyens directs de mise en oeuvre et la main d'oeuvre et sa formation nécessaire tel qu'il l'a été dit précédemment.

L'invention propose ainsi une utilisation d'un pneumatique tel qu'il vient d'être décrit dans un ensemble monté pour avion tel que décrit précédemment dont la jante est de type monobloc comportant une fonctionnalité base creuse.

L'invention propose également une utilisation d'un pneumatique dans un ensemble monté pour avion tel que décrit précédemment dont la roue est de type monobloc comportant une fonctionnalité base creuse, ledit pneumatique comportant au moins l'une quelconque des caractéristiques du pneumatique selon l'invention tel que décrit précédemment.

L'invention propose encore une utilisation d'un pneumatique tel qu'il vient d'être décrit dans un ensemble monté pour avion dont la pression de gonflage est supérieure à 9 bars et dont la flèche relative est supérieure à 30%, constitué d'une roue et du pneumatique, ladite roue comportant une jante de réception du pneumatique et plus spécifiquement des sièges recevant les bourrelets dudit pneumatique, ladite roue étant de type en plusieurs parties.

L'invention propose également une utilisation d'un pneumatique dans un ensemble monté pour avion dont la pression de gonflage est supérieure à 9 bars et dont la flèche relative est supérieure à 30%, constitué d'une roue et du pneumatique, ladite roue comportant une jante de réception du pneumatique et plus spécifiquement des sièges recevant les bourrelets dudit pneumatique, ladite roue étant de type en plusieurs parties, ledit pneumatique comportant au moins l'une quelconque des caractéristiques du pneumatique selon l'invention tel que décrit précédemment.

L'invention propose encore un ensemble monté pour avion, dont la pression de gonflage est supérieure à 9 bars et dont la flèche relative est supérieure à 30%, constitué d'une roue et d'un pneumatique tel que décrit précédemment, comportant notamment des bourrelets, ladite roue comportant une jante de réception du pneumatique et plus spécifiquement des sièges recevant les bourrelets dudit pneumatique, ladite roue étant de type en plusieurs parties.

Le pneumatique selon l'invention présente également des avantages en ce qui concerne le montage et le démontage de l'ensemble monté dans le cas de roue en plusieurs parties. En effet, la souplesse des bourrelets du pneumatique d'avion selon l'invention va permettre de faciliter la mise en place du pneumatique lors du montage en diminuant les risques de dégradation de celui-ci.

Par ailleurs, le pneumatique selon l'invention permet de faciliter les opérations de démontage de tels ensembles montés. Les conditions extrêmes d'utilisation de ces ensembles montés conduisent à une liaison très forte entre le pneumatique et la jante qui nécessite d'exercer sur ledit pneumatique des forces importantes ; celles-ci doivent être exercées de manière très homogène sur la périphérie du flanc du pneumatique lorsque celui-ci possède des bourrelets rigides au risque de bloquer l'ensemble monté dès que le bourrelet se positionne de biais par rapport à la jante de la roue. Dans le cas de l'invention, cette opération est simplifiée du fait de la souplesse des bourrelets du pneumatique. Les outils et la qualification de la main d'oeuvre peuvent ainsi être moins spécialisés dans le cas de l'invention.

D'autres détails et caractéristiques avantageux de l'invention ressortiront ci-après de la description d'exemples de réalisations de l'invention en références aux figures 1 à 7 qui représentent :

- figure 1, une vue schématique en section axiale d'un pneumatique selon l'invention,
- figure 2, une représentation schématique d'une vue en coupe d'un câble selon l'invention,
- figure 3, une vue schématique en perspective montrant la disposition d'une partie des renforts de l'armature de carcasse,
- figure 4, une représentation schématique d'un bourrelet selon un deuxième mode de réalisation de l'invention,
- figure 5, une vue schématique en section axiale d'un pneumatique selon une variante de réalisation de l'invention représentée sur la figure 1,
- figure 6, une vue schématique en section axiale d'un pneumatique selon une autre variante de réalisation de l'invention représentée sur la figure 1,
- figure 7a, 7b, 7c, les étapes de montage d'un pneumatique sur une jante pour former un ensemble monté selon l'invention.

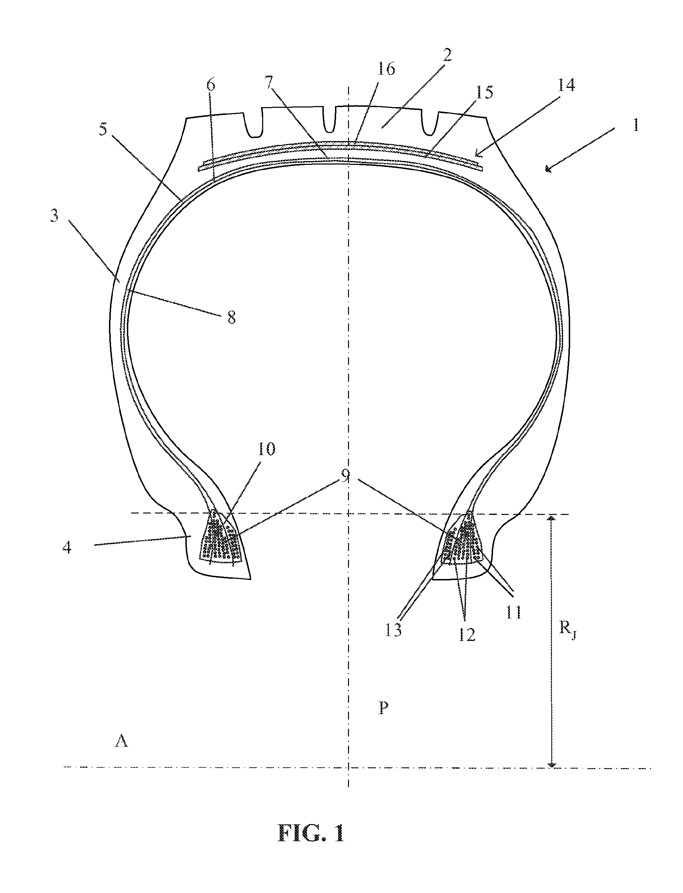

Les figures 1 à 7 ne sont pas représentées à l'échelle pour en simplifier la compréhension.

Le pneumatique 1 d'avion représenté schématiquement en demi-coupe axiale sur la figure 1 comprend un sommet 2, deux flancs 3 et deux bourrelets 4. Une armature de carcasse 5 s'étend d'un bourrelet 4 à l'autre et est constituée de deux alignements circonférentiels 6 et 7 d'éléments de renforcement. Les alignements circonférentiels des éléments de renforcement 6 et 7 sont orientées radialement dans les flancs 3 et sont constituées d'éléments de renforcement en polyamide aromatique ou aramide. Les éléments de renforcement sont disposés parallèlement et sont séparés par une couche de mélange 8 dont la nature et le module sont adaptés en fonction de leur position dans le pneumatique.

L'ancrage des deux alignements circonférentiels 6 et 7 est assuré dans les bourrelets 3 par des alignements ou « piles » 9 de câbles enroulés orientés circonférentiellement et disposés axialement de part et d'autre de chaque alignement circonférentiel des éléments de renforcement 6 et 7. Chaque alignement ou pile 9 de câbles orientés circonférentiellement peut être obtenue par enroulement hélicoïdal d'un câble. Les éléments de renforcement radiaux de l'armature de carcasse et les câbles orientés circonférentiellement sont séparés les uns des autres par un mélange caoutchouteux de liaison ou d'ancrage 10 pour éviter tout contact direct d'un élément de renforcement avec un autre. Ce mélange caoutchouteux d'ancrage selon l'invention présente une rigidité telle que son module d'extension à 10 % de déformation est compris entre 10 et 20 MPa. Le mélange caoutchouteux d'ancrage selon l'invention présente comme autres caractéristiques mécaniques une excellente résistance au fluage à haute température et une très bonne stabilité à haute température. La rigidité choisie donne aux structures de bourrelet décrites une souplesse suffisante pour permettre de réaliser aisément les montages et démontages des pneumatiques, sans dégrader les performances d'endurance ; la résistance au fluage est essentielle pour obtenir un ancrage solide et durable des armatures de carcasse dans les bourrelets et la stabilité thermique à haute température est elle aussi importante en raison des conditions thermiques très sévères que peuvent subir en service les pneumatiques.

La tension qui se développe dans les éléments de renforcement radiaux lors du gonflage du pneumatique 1 est reprise notamment par l'adhésion latérale entre chaque alignement circonférentiel 6 et 7 et les piles 9 de câbles orientés circonférentiellement. Cette structure de bourrelet assure un excellent ancrage qui reste très efficace même pour les pressions de gonflage très élevées des pneumatiques d'avion, supérieures à 9 bars et pouvant atteindre 25 bars dans certaines applications particulières. Les pneumatiques ont montré une aptitude à résister à quatre fois la pression d'utilisation comme l'exige la norme TSO C62.

Les piles 9 de câbles orientés circonférentiellement sont réparties en trois groupes, deux piles 11 disposées axialement extérieurement à l'armature de carcasse 5 du côté extérieur du pneumatique, deux piles 13 disposées axialement intérieurement relativement à l'armature de carcasse 5, du côté intérieur du pneumatique et 4 piles 12 disposées entre les deux alignements circonférentiels 6 et 7 de l'armature de carcasse 5.

L'invention peut encore prévoir la mise en place de cônes de mélanges caoutchouteux axialement entre l'armature de carcasse et les piles 9 de câbles orientés circonférentiellement pour autoriser une mise en place des câbles orientés circonférentiellement telle que la distance axiale entre ceux-ci et l'armature de carcasse augmente selon la direction radiale. Cette variante de réalisation n'est pas illustrée sur les figures. Une telle mise en place des câbles a été décrite dans la demande française FR 0209355.

Dans le cas du pneumatique décrit, en considérant le nombre de spires disposées intérieurement et extérieurement relativement à l'armature de carcasse, on obtient :

$$\Sigma R_I / \Sigma R_E \cong 1{,}24.$$

Cela a l'avantage d'homogénéiser la sollicitation mécanique des câbles orientés circonférentiellement dans le bourrelet.

On peut aussi noter que le nombre de spires des piles diminue progressivement avec la distance relativement à l'axe de rotation A du pneumatique 1. Il en résulte une forme sensiblement conique de la disposition des câbles orientés circonférentiellement. Cela a pour avantage de stabiliser fortement les bourrelets 4 lors du gonflage du pneumatique et lors du passage dans l'aire de contact en service.

L'ensemble des spires des piles 9 est noyé dans le mélange caoutchouteux 10 de module d'extension à 10 % de déformation compris entre 10 et 20 MPa pour assurer une bonne reprise des efforts dus à la pression de gonflage et ainsi un excellent ancrage de l'armature de carcasse dans les bourrelets 4.

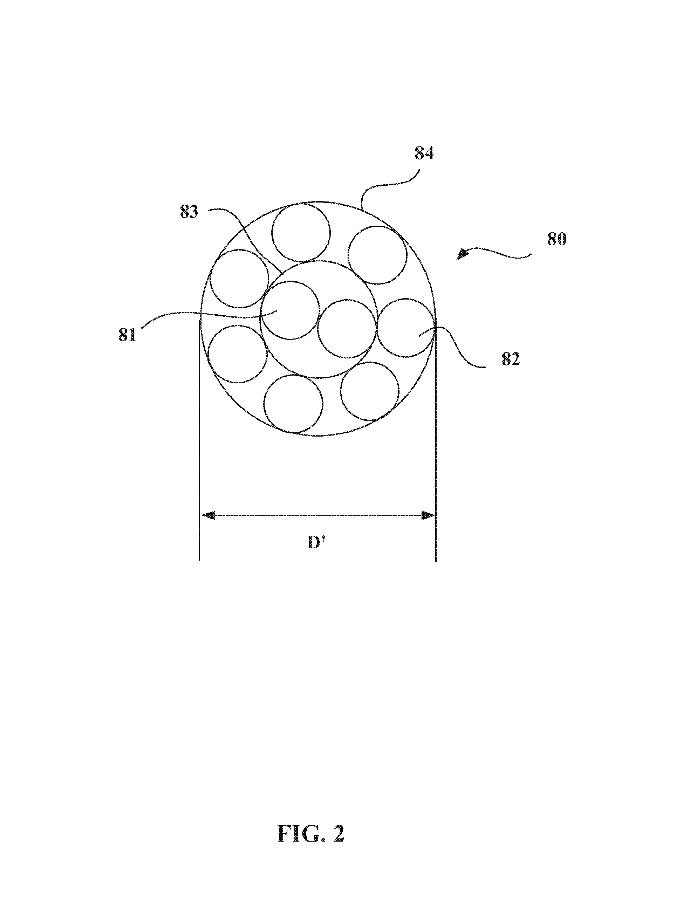

La figure 2 illustre un câble 80 utilisé, selon l'invention, en enroulement circonférentiel comme moyen d'ancrage des éléments de renforcement de l'armature de carcasse. Le câble 80 est un câble à couches de formule 9.35, c'est-à-dire constitué de 9 fils élémentaires de diamètre égal à 35/100 mm ; le câble 80 répond à la formule 2 + 7 avec 2 fils 81, constituant la première couche, tordus ensemble pour former un retors, et 7 fils 82, formant la couche externe, enroulés ensemble en hélice autour de la première couche. La figure 2 illustre cet enroulement en représentant les 7 fils 82 au contact du cercle 83 schématisant l'espace occupé par le retors formé des 2 fils 81 de la première couche. Les fils 81, 82 sont en acier avec une teneur en carbone comprise entre 0.7 et 0.9%. Les fils ont été préalablement traités pour comporter un revêtement en laiton favorisant l'adhésion du fil sur le caoutchouc. Les fils présentent un taux d'écrouissage inférieur à 3.5. Le câble présent un diamètre total D', correspondant au diamètre du cercle circonscrit 84 à la couche externe, égal à 1.35 mm. La mesure de l'aptitude à la pénétration de ce câble faite selon la méthode décrite précédemment à conduit à une valeur de 100%. La force rupture du câble est égale à 198 daN et son allongement à la rupture de 5.4%. L'allongement à la rupture est obtenu après un traitement thermique tel que celui précité ; le traitement thermique permet d'augmenter les allongements élastique et plastique qui viennent s'ajouter à l'allongement structurel. Ce dernier est égal à 0.1% pour le câble 80 de formule 9.35.

Un autre câble à couches, de formule 13.35, a été testé ; ce câble est constitué de 13 fils élémentaires de diamètre égal à 35/100 mm et de formule 4 + 9, avec 4 fils, constituant la première couche, tordus ensembles pour former un retors, et 9 fils, formant la couche externe, enroulés ensembles en hélice autour de la première couche. Les fils élémentaires sont les mêmes que dans le cas précédent. La mesure de l'aptitude à la pénétration de ce câble faite selon la méthode décrite précédemment à conduit à une valeur de 80%. La force rupture du câble est égale à 282 daN et son allongement à la rupture de 6.4%. A noter que l'allongement structurel de ce câble de formule 13.35 est de 0.2%.

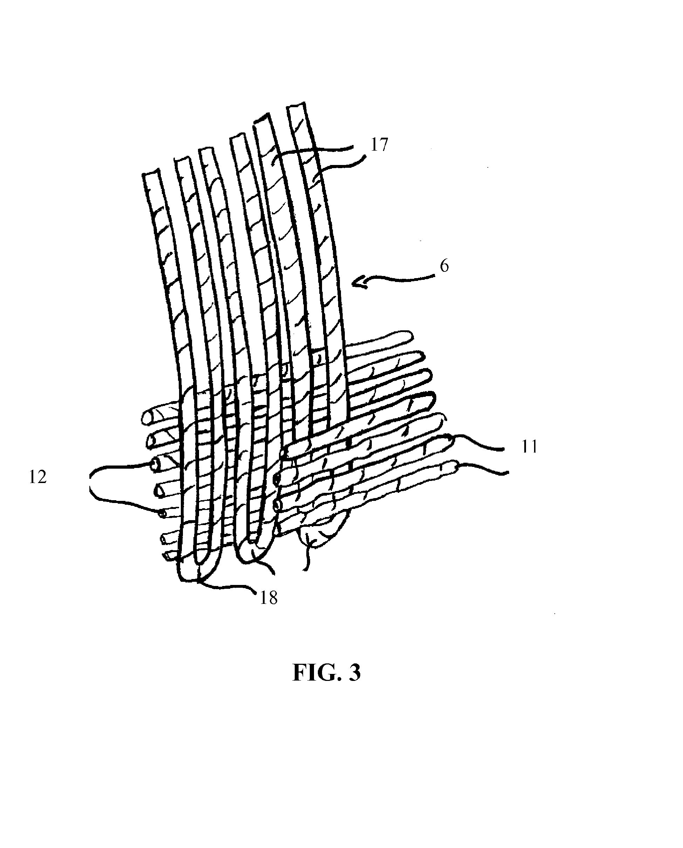

La figure 3 est une vue en perspective de l'un des alignements circonférentiels des éléments de renforcement, l'alignement 6, dans laquelle seuls les éléments de renforcement sont représentés. Sur cette figure 3, on voit l'alignement circonférentiel 6 des éléments de renforcement de l'armature de carcasse qui est constitué de portions d'éléments de renforcement 17. A leurs extrémités radialement inférieures, les portions d'éléments de renforcement 17 forment des boucles 18 juxtaposées, situées dans le bourrelet 4. Ces boucles 18 sont adjacentes et ne se chevauchent pas. De part et d'autre axialement de l'alignement circonférentiel 6 des éléments de renforcement de l'armature de carcasse, sont représentées seulement les piles 11 et 12, d'éléments de renforcement orientés circonférentiellement, directement adjacentes à cet alignement 6. Pour la clarté du dessin, seul l'alignement circonférentiel 6 d'éléments de renforcement et deux piles ont été représentés, mais, l'alignement circonférentiel 7 d'éléments de renforcement de l'armature de carcasse présente la même disposition des portions de renforts 17.

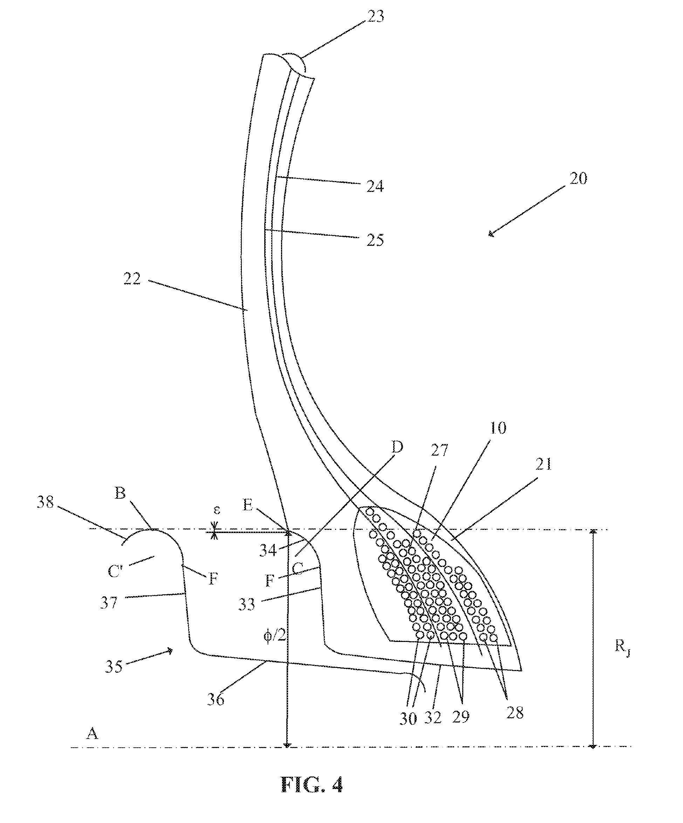

La figure 4 illustre un bourrelet 21 et un flanc 22 d'un second mode de réalisation d'un pneumatique 20 selon l'invention dans lequel l'armature de carcasse 23 est constituée de deux alignements circonférentiels, 24, 25 d'éléments de renforcement en polyamide aromatique ou aramide. Dans le bourrelet 21 sont disposées des piles 27 de câbles d'orientation circonférentielle. Ces piles 27 sont ici séparées en trois groupes. On trouve successivement axialement du côté intérieur du bourrelet vers le côté extérieur, deux piles 28 disposées intérieurement relativement à l'alignement circonférentiel d'éléments de renforcement de l'armature de carcasse 24, trois piles 29 disposées entre les alignements circonférentiels d'éléments de renforcement de l'armature de carcasse 24 et 25, et deux piles 30 disposées extérieurement relativement à l'alignement circonférentiel d'éléments de renforcement de l'armature de carcasse 25.

**EP 2 384 910 A2**

Comme précédemment, le nombre de spires de câbles orientés circonférentiellement est tel que l'on vérifie que la somme des rigidités d'extension des piles disposées extérieurement relativement à l'armature de carcasse est sensiblement du même ordre que la somme des rigidités d'extension des piles disposées intérieurement relativement à l'armature de carcasse 23.

La surface extérieure du bourrelet 21 comprend un siège 32, une paroi tronconique d'orientation sensiblement radiale 33 adjacente radialement intérieurement à une paroi 34 dont la section est un arc de cercle EF de centre C. C est disposé à l'extérieur du bourrelet 21. En considérant la ligne CD qui traverse le bourrelet en faisant un angle $\alpha$ = +45 $\pm$ 5 degrés relativement à l'axe de rotation A du pneumatique (cet angle est déterminé lorsque le pneumatique est monté sur sa jante), on constate que l'ensemble des éléments de renforcement orientés circonférentiellement 27 est disposé à une distance radiale de l'axe A inférieure ou égale à cette ligne CD. Cette ligne CD définit sensiblement une zone d'encastrement très rigide où les déformations sont très réduites et une zone de flexion radialement au-dessus de CD. Le fait que tous les éléments de renforcement orientés circonférentiellement se trouvent dans la zone d'encastrement renforce l'endurance du bourrelet.

Cette surface extérieure du bourrelet est destinée à venir s'appuyer contre la paroi d'une jante 35 dont le profil extérieur est aussi représenté sur la figure 4. Ce profil comprend le siège 36 et la paroi sensiblement radiale du crochet 37 suivie du rebord 38. Le rebord 38 a une section droite en arc de cercle de centre C'. Le point de diamètre le plus élevé est B, de rayon $R_J$. Le point E disposé sur la surface axialement extérieure du bourrelet 21 est destiné à venir en contact avec sensiblement le point B. Lorsque le pneumatique est monté sur la jante 35, les surfaces 34 et 38 sont homocentriques, c'est-à-dire que leurs centres C et C' sont confondus. Le point E est disposé sur une circonférence de diamètre $\Phi$. On a la relation :

$$\Phi = 2(R_J - \varepsilon)$$

avec $\varepsilon$ compris entre 0,5 et 2 mm.

Ce léger décalage du point E entre sa position libre et sa position montée sur la jante, en contact avec B, permet au bourrelet d'être légèrement mis en extension lors de son montage sur la jante et favorise la qualité du contact obtenu. Ce contact jusqu'au point E renforce la stabilité du bourrelet lors de la mise en pression du pneumatique et lors du passage dans l'aire de contact en service. En conséquence, on constate que les alignements circonférentiels de l'armature de carcasse sont nettement moins sollicités en compression lors du passage dans l'aire de contact contrairement à ce qui se passe pour des pneumatiques d'avion d'architecture classique.

Sur la figure 1 est aussi présenté un premier exemple d'armature de sommet 14. Celle-ci est constituée d'un bloc de travail comportant deux couches d'éléments de renforcement 15 et 16 d'orientation sensiblement circonférentielle obtenues par enroulement hélicoïdal d'au moins un élément de renforcement. Le nombre de couches de renfort ainsi que le pas de pose sont adaptés en fonction de la dimension du pneumatique et de ses conditions d'utilisation. Ce mode de réalisation d'une armature de sommet a l'avantage de procurer un frettage très efficace qui minimise la variation des dimensions du pneumatique lors du gonflage ainsi qu'à haute vitesse. On constate que l'évolution du profil peut être trois à quatre fois plus faible que pour un pneumatique d'avion usuel tel un 30x8.8R15 AIRX. Cet excellent frettage a aussi l'avantage de ne pas mettre en forte extension les mélanges constituant la bande de roulement du sommet du pneumatique. Les fissurations en surface de la bande de roulement dues à l'ozone présente dans l'air sont fortement réduites.

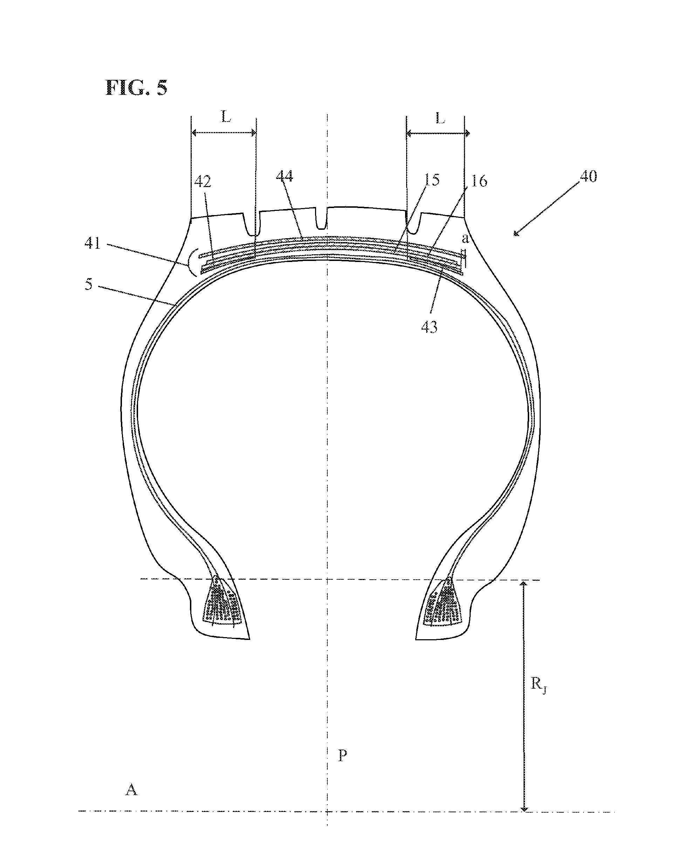

L'armature de sommet 41 du pneumatique 40 présenté sur la figure 5 comporte comme précédemment deux couches d'éléments de renforcement d'orientation sensiblement circonférentielle 15 et 16 et est complétée par deux couches 42 et 43 d'éléments de renforcement, orientés sensiblement circonférentiellement disposées axialement de part et d'autre du plan médian du pneumatique dans les zones latérales du sommet. Elles permettent de renforcer le frettage des zones latérales L du sommet. Les couches 42 et 43 sont disposées radialement entre les couches 15 et 16 et l'armature de carcasse 5.

L'armature 41 est aussi complétée par une couche sommet de protection 44 disposée radialement extérieurement relativement aux autres couches de l'armature de sommet 41. Cette couche sommet de protection peut être constituée d'éléments de renforcement métalliques ondulés pour ne pas être sollicités en fonctionnement normal. Il est à noter que cette couche de protection s'étend axialement au-delà des couches 15 et 16 de part et d'autre du plan médian P du pneumatique d'une distance axiale a.

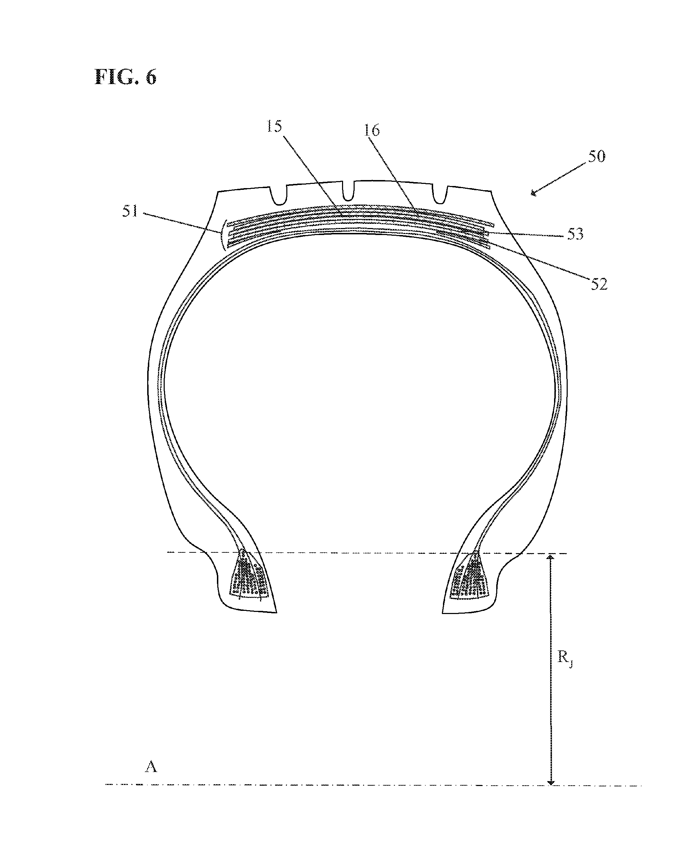

La figure 6 présente un pneumatique 50 avec une armature de sommet 51 comportant en plus deux couches 52, 53 d'éléments de renforcement, parallèles entre eux dans chaque couche et croisés d'une couche à la suivante en faisant avec la direction circonférentielle un angle $\alpha$, compris entre 5° et 35°. Ces deux couches sont disposées radialement en dessous des couches d'éléments de renforcement circonférentiels 15 et 16. Elles augmentent la poussée de dérive du pneumatique 30 relativement à celle du pneumatique 40.

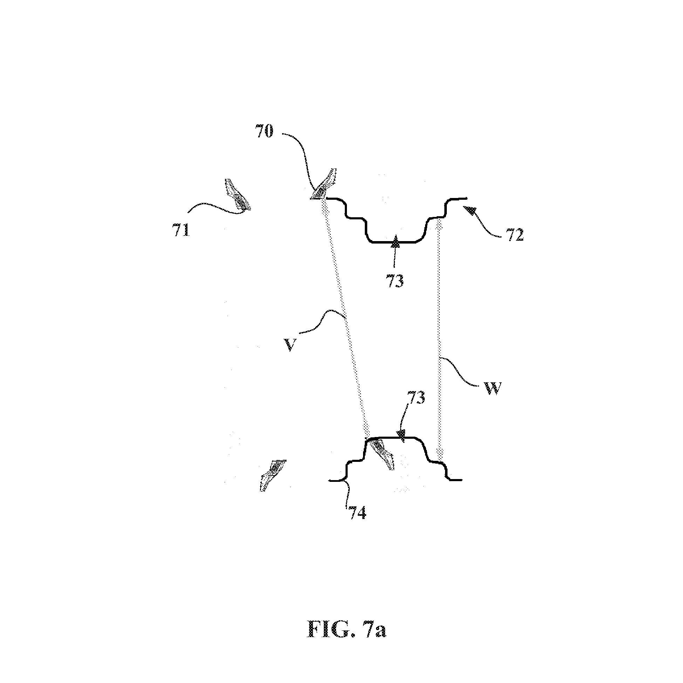

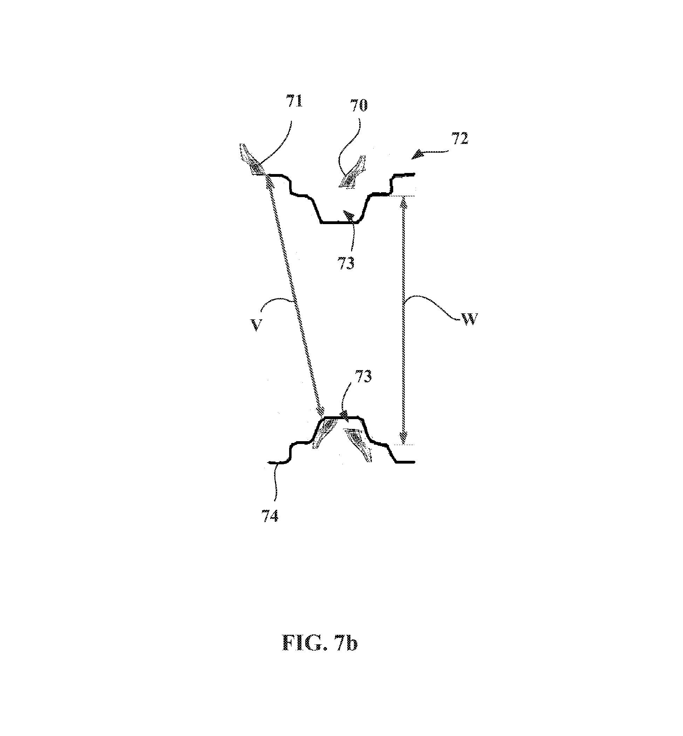

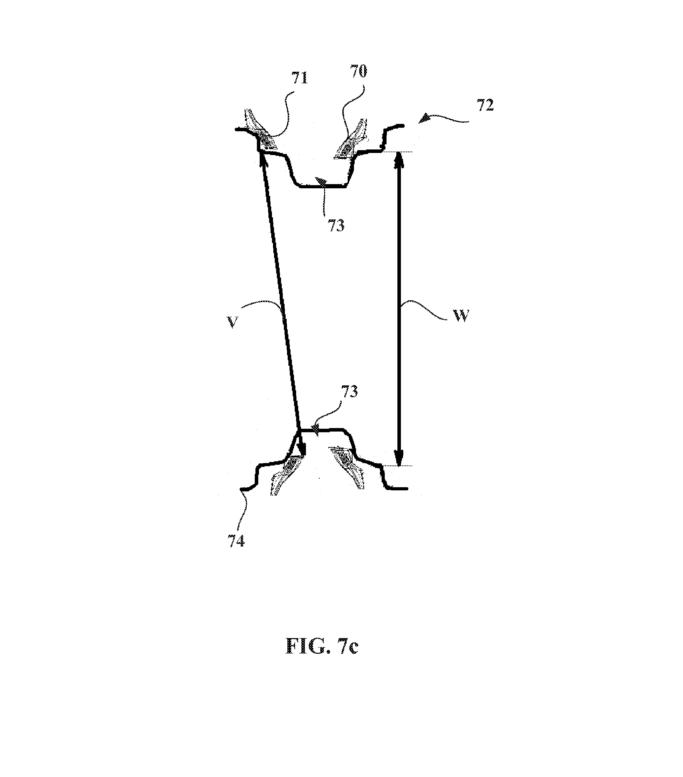

Les figures 7a, 7b, 7c illustrent par des schémas en coupe les étapes de montage d'un pneumatique selon l'invention sur une roue 72 de type monobloc comportant une fonctionnalité base creuse représentée par les renfoncements 73. Les figures ne représentent schématiquement que les bourrelets 70, 71 du pneumatique selon l'invention.

Sur la figure 7a, on observe qu'une partie du premier bourrelet 70 est passée par-dessus le rebord 74 de jante et est placée cette dans la zone en renfoncement ou base creuse 73. Il est alors possible de faire passer le reste du bourrelet 70 par-dessus le rebord 74 grâce à une légère ovalisation du bourrelet correspondant du pneumatique. La déformation nécessaire du bourrelet 70 pour effectuer cette étape doit permettre d'obtenir une distance bord à bord diamétralement opposés du bourrelet 70 équivalente à la longueur V. Cette déformation du bourrelet s'accompagne en outre d'un gauchissement du bourrelet 70 permettant de faire passer le bourrelet 70 par-dessus le rebord 74 de jante progressivement. Le diamètre du bourrelet 70 correspond sensiblement au diamètre W du siège de jante devant recevoir le bourrelet.

La figure 7b montre qu'il en est de même pour faire passer le second bourrelet 71 par-dessus le rebord 74 de la jante 72. Une partie du second bourrelet 71 est passée par-dessus le rebord 74 de jante et est placée cette dans la zone en renfoncement ou base creuse 73. Comme précédemment pour le bourrelet 70, il est alors possible de faire passer le reste du bourrelet 71 par-dessus le rebord 74 grâce à une légère ovalisation du bourrelet correspondant du pneumatique, s'accompagnant d'un gauchissement de celui-ci.

La figure 7c illustre la fin du montage par une étape de gonflage à une pression telle qu'elle va assurer la mise en place des bourrelets 70, 71 sur les sièges 75, 76 en appui sur les rebords de j ante.

Des expérimentations concernant le mélange caoutchouteux d'ancrage ont montré que pour obtenir de bons résultats en endurance, on peut utiliser un mélange caoutchouteux d'ancrage contenant un élastomère synthétique « SBR », ou copolymère de butadiène-styrène, de Tg comprise entre -70° et -30°C, utilisé seul ou en coupage avec du « BR », ou polybutadiène. De préférence le BR a une Tg comprise entre -110° et -90°C. Le ou les élastomères synthétiques sont utilisés en proportion totalisée d'au moins 50% de la masse totale d'élastomère, le solde est constitué par du caoutchouc naturel (« NR »). Le mélange caoutchouteux d'ancrage contient en plus des charges de renforcement tel du noir de carbone et un système de vulcanisation appropriés pour obtenir la rigidité désirée. Les éléments de renforcement circonférentiels sont dans les exemples présentés des câbles métalliques laitonnés. Il est donc nécessaire que le mélange caoutchouteux d'ancrage ait un taux de soufre important et contienne des additifs promoteurs de l'adhésion avec le laiton (par exemple des sels métalliques de cobalt ou de nickel). On utilise par exemple un taux de soufre compris entre 5 et 8 % de la masse totale d'élastomère et un taux de noir de carbone compris entre 60 et 70 % de la masse totale d'élastomère. Le noir de carbone N347 peut être utilisé préférentiellement.

Quatre mélanges ont été réalisés et testés pour illustrer les caractéristiques des mélanges caoutchouteux d'ancrage selon l'invention.

Les caractéristiques principales de la formulation de ces mélanges se trouvent dans le tableau ci-dessous.

| Produits | 1 | 2 | 3 | 4 |
|---|---|---|---|---|
| NR | 100 | 80 | 40 | 40 |
| SBR2300 | 0 | 10 | 30 | 60 |
| BR113 | 0 | 10 | 30 | 0 |
| N347 | 62 | 62 | 62 | 62 |
| Soufre | 7 | 7 | 7 | 7 |

Ces quatre mélanges ont été testés ainsi :

- rigidité : détermination du module d'élasticité à 10 % d'extension et température ambiante,

- fluage : test de fluage statique à 150°C pendant 5 heures comme décrit précédemment, et

- stabilité thermique : test de rhéométrie à 197°C pendant 10 mn tel que décrit précédemment.

| Test | 1 | 2 | 3 | 4 |
|---|---|---|---|---|
| Module d'élasticité | 10,6 | 11,8 | 11,6 | 13,0 |
| Test de fluage | Rupture après 30 mn | Rupture après 60 mn | OK | OK |
| τ | ---- | ---- | $1.10^{-3}$/mn | $0,6.10^{-3}$/mn |
| r | 35 % | 26 % | 1,5% | 7,7% |

Les quatre mélanges ont une rigidité satisfaisante.

Le mélange 1, à base de caoutchouc naturel uniquement, présente une résistance au fluage statique à haute température tout à fait insuffisante. On observe une rupture des éprouvettes après 30 mn de test. Sa stabilité thermique est aussi non satisfaisante puisque le mélange présente un taux de réversion très marqué.

Le mélange 2 a des résultats améliorés relativement au premier mais n'est pas non plus satisfaisant.

Les mélanges 3 et 4 passent avec succès les tests de fluage statique et de rhéométrie. Leur résistance au fluage est tout à fait correcte et leur stabilité thermique à haute température aussi. Le mélange 3, qui comporte trois élastomères, présente un résultat légèrement plus satisfaisant en réversion que le mélange 4.

Des essais pneumatiques ont aussi été réalisés avec des mélanges caoutchouteux d'ancrage de formulations similaires aux mélanges 1 à 4 de l'essai.

On a testé un pneumatique de dimension 30x8.8 R 15/16/225 comportant :

- comme armature de carcasse deux alignements circonférentiels d'éléments de renforcement ;
- comme câbles orientés circonférentiellement des câbles d'acier tels que ceux décrits sur la figure 2, de formule 9.35, et répartis en 7 piles 27 (comme illustrées sur la figure 4) :

  • 2 piles axialement les plus intérieures avec 12 et 15 spires,
  • 3 piles entre les alignements circonférentiels 24 et 25 avec 17, 14 et 16 spires,
  • 2 piles axialement les plus extérieures avec 11 et 7 spires.

- une armature de sommet avec deux couches d'éléments de renforcement orientés sensiblement circonférentiellement constitués de retors.

Les pneumatiques ont montré une aptitude correcte pour les opérations de montage et de démontage, mais seuls ceux comportant un mélange caoutchouteux d'ancrage correspondant aux formulations des mélanges 3 et 4 ont montré une résistance en endurance suffisante de l'ancrage de la nappe carcasse dans les bourrelets.

Par ailleurs, les pneumatiques correspondants aux mélanges 3 et 4 ont subi des tests de résistance à l'éclatement et les pressions maximales mesurées ont été de l'ordre de 58 bars. Ils sont aussi caractérisés par un taux d'allongement de leur développement entre la pression nulle et leur pression de service de 15 bars de l'ordre de 1,5 %. Ces pneumatiques ont aussi subi avec succès des tests de décollage similaires aux tests normalisés pour l'homologation des pneumatiques pour avion.

La confection d'un tel pneumatique selon l'invention peut avantageusement être réalisée sur un noyau rigide imposant la forme de sa cavité intérieure, tels ceux décrits par EP 242 840 ou EP 822 047, incorporés par référence dans la présente demande. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation.

Ce mode de fabrication a l'avantage de réduire fortement voire d'éliminer les précontraintes imposées aux renforts, particulièrement à ceux orientés à 0°, lors des phases traditionnelles de conformation.

On peut aussi refroidir partiellement le bandage sur le noyau pour maintenir les éléments de renforcement dans l'état de déformation imposé lors de la pose.

On peut aussi, de manière équivalente, fabriquer le pneumatique sur un tambour tel que décrit dans WO 97/47 463 ou EP 0 718 090, à condition de faire la conformation de l'ébauche du pneumatique avant d'effectuer la pose des câbles orientés circonférentiellement.

On peut encore réaliser la pose des câbles orientés circonférentiellement sur une forme à la géométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

Quel que soit le mode de fabrication choisi pour la réalisation d'un pneumatique selon l'invention dans lequel les moyens d'ancrage des éléments de renforcement de l'armature de carcasse dans chaque bourrelet sont des câbles orientés circonférentiellement bordant axialement les alignements circonférentiels desdits éléments de renforcement de l'armature de carcasse, il apparaît que la combinaison des câbles posés selon une orientation circonférentielle et du mélange caoutchouteux d'ancrage selon l'invention permet la réalisation de pneumatiques qui peuvent être montés sur des jantes de roues de type monoblocs.

En outre, le choix des câbles posés selon une orientation circonférentielle dans la zone du bourrelet pour assurer l'ancrage des éléments de renforcement de l'armature de carcasse permet d'obtenir des rendements de fabrication satisfaisants ; en effet, le choix de ces câbles autorise un accrochage lors de leur pose à cru suffisant pour qu'ils ne risquent pas de se détacher ou simplement se déplacer avant la phase de cuisson.

La description des figures a été limitée au cas de pneumatiques dans lesquels les moyens d'ancrage des éléments de renforcement de l'armature de carcasse dans chaque bourrelet sont des câbles orientés circonférentiellement bordant axialement les alignements circonférentiels desdits éléments de renforcement de l'armature de carcasse mais comme énoncé précédemment, elle vise également les pneumatiques dans lesquels l'armature de carcasse comporte au moins une couche d'éléments de renforcement présentant une zone de retournement autour d'au moins un élément de renforcement orienté circonférentiellement tel qu'une tringle.

L'invention ne doit également pas être comprise comme étant limitée au cas des ensembles montés constitués notamment d'une roue de type monobloc comportant une fonctionnalité base creuse ; comme expliqué précédemment l'invention vise également des ensembles montés constitués d'un pneumatique selon l'invention et d'une roue usuelle pour les applications avions constituée de plusieurs parties.

**Revendications**

1. Ensemble monté pour avion constitué d'une roue et d'un pneumatique (1, 20), dont la pression de gonflage est supérieure à 9 bars et dont la flèche relative est supérieure à 30%, ledit pneumatique comprenant un sommet (2), deux flancs (3, 22) et deux bourrelets (4, 21), une armature de carcasse (5, 24, 25) ancrée dans les deux bourrelets et une armature de sommet (14, 41), dans lequel l'armature de carcasse comprend au moins un alignement circonférentiel d'éléments de renforcement (6) et dans lequel les moyens d'ancrage desdits éléments de renforcement dans chaque bourrelet comprennent au moins un élément de renforcement orienté circonférentiellement, ladite roue comportant une jante (35) de réception du pneumatique et plus spécifiquement des sièges (36) recevant les bourrelets (4, 21) dudit pneumatique (1,20), au moins un mélange caoutchouteux d'ancrage (10) étant en contact avec ledit au moins un élément de renforcement orienté circonférentiellement et avec les éléments de renforcement de l'armature de carcasse (5), **caractérisé en ce que** ladite jante comporte une fonctionnalité base creuse, et **en ce que** ledit mélange caoutchouteux d'ancrage (10) a un module d'élasticité à une déformation de 10% inférieur à 20 MPa.

2. Ensemble monté pour avion selon la revendication 1, **caractérisé en ce que** la jante (35) est de type monobloc.

3. Ensemble monté pour avion selon la revendication 1 ou 2, **caractérisé en ce que** les sièges (36) de la jante présentent une pente supérieure à 5°, et de préférence inférieure à 15°.

4. Ensemble monté pour avion selon l'une des revendications 1 à 3, **caractérisé en ce que** les bourrelets (4, 21) du pneumatique sont ovalisables.

5. Ensemble monté pour avion selon l'une des revendications 1 à 4, **caractérisé en ce que** les bourrelets (4, 21) du pneumatique peuvent être gauchis.

6. Ensemble monté pour avion selon l'une des revendications 1 à 5, **caractérisé en ce que** l'armature de carcasse du pneumatique comporte au moins une couche d'éléments de renforcement présentant une zone de retournement autour d'au moins un élément de renforcement orienté circonférentiellement.

7. Ensemble monté pour avion selon la revendication 6, **caractérisé en ce que** l'élément de renforcement orienté circonférentiellement est une tringle.

8. Ensemble monté pour avion selon l'une des revendications 1 à 5, **caractérisé en ce que** les moyens d'ancrage desdits éléments de renforcement dans chaque bourrelet du pneumatique comprennent des éléments de renforcement orientés circonférentiellement bordant axialement lesdits alignements circonférentiels desdits éléments de renforcement de l'armature de carcasse.

9. Ensemble monté pour avion selon la revendication 8, **caractérisé en ce que** les éléments de renforcement orientés circonférentiellement sont des câbles.

10. Ensemble monté pour avion selon la revendication 9, **caractérisé en ce que** lesdits câbles présentent une aptitude à la pénétration comprise entre 80 et 100%, **en ce que** la force rupture des câbles est supérieure à 150 daN et **en ce que** lesdits câbles présentent un allongement à la rupture supérieur à 4%.

**11.** Ensemble monté pour avion selon l'une des revendications 9 ou 10, **caractérisé en ce que** la force rupture des câbles orientés circonférentiellement est inférieure à 400 daN.

**12.** Ensemble monté pour avion selon l'une des revendications 9 à 11, **caractérisé en ce que** l'allongement à la rupture des câbles orientés circonférentiellement est inférieur à 8%.

**13.** Ensemble monté pour avion selon l'une des revendications 9 à 12, **caractérisé en ce que** lesdits câbles orientés circonférentiellement desdits moyens d'ancrage sont constitués de fils choisis dans le groupe des renforts de carbone, de tungstène, d'aramide, de fibre de verre, ou d'acier.

**14.** Ensemble monté pour avion selon l'une des revendications 9 à 13, les câbles orientés circonférentiellement étant métalliques, **caractérisé en ce que** lesdits câbles orientés circonférentiellement sont traités thermiquement.

**15.** Ensemble monté pour avion selon l'une des revendications 9 à 14, **caractérisé en ce que** la surface des câbles orientés circonférentiellement comporte un revêtement adhérisant, tel qu'un revêtement en laiton.

**16.** Ensemble monté pour avion selon l'une des revendications 8 à 15, dans lequel, en considérant $\Sigma R_I$ somme des rigidités d'extension des seconds renforts disposés axialement intérieurement relativement à l'armature de carcasse et en considérant $\Sigma R_E$ somme des rigidités d'extension des seconds renforts disposés axialement de part et d'autre de l'armature de carcasse, on a :

$$0,6 \leq \frac{\sum R_I}{\sum R_E} \leq 1,5$$

**17.** Ensemble monté pour avion selon la revendication 16, dans lequel :

$$0,7 \leq \frac{\sum R_I}{\sum R_E} \leq 1,3 \, .$$

**18.** Ensemble monté pour avion selon l'une des revendications 8 à 17, dans lequel, la surface extérieure des bourrelet comprenant un siège, une paroi tronconique d'orientation sensiblement radiale adjacente radialement intérieurement à une paroi dont la section est un arc de cercle EF de centre C et en considérant une ligne CD traversant le bourrelet en faisant un angle $\alpha = +45 \pm 5$ degrés relativement à l'axe A du pneumatique, l'ensemble des seconds renforts est disposé à une distance radiale de l'axe A inférieure ou égale à ladite ligne CD.

**19.** Ensemble monté pour avion selon l'une des revendications 8 à 18, dans lequel, ledit bourrelet (4, 21) ayant une surface extérieure (32) destinée à venir en contact avec la surface correspondante du siège (36) et du crochet (37, 38) de ladite jante (35), après montage sur ladite jante et gonflage dudit pneumatique, la zone de contact entre ladite surface extérieure dudit bourrelet et ladite jante s'étend au moins jusqu'au point B du crochet de rayon maximum $R_J$.

**20.** Ensemble monté pour avion selon la revendication 19, dans lequel, $\Phi$ étant le diamètre de la circonférence de la surface extérieure du bourrelet (4, 21) destinée à venir s'appuyer contre la circonférence du crochet de la jante de rayon maximum $R_J$, on a :

$$\Phi = 2(R_J - \varepsilon)$$

avec $\varepsilon$ compris entre 0,5 et 2 mm.

**21.** Ensemble monté pour avion selon l'une des revendications 8 à 20, dans lequel lesdits premiers renforts (6) de l'armature de carcasse (5) forment des allers et retours disposés de façon adjacente, avec, au niveau de chaque bourrelet (4, 21), des boucles (18) reliant chaque fois un aller à un retour.

**22.** Ensemble monté pour avion selon l'une des revendications précédentes, **caractérisé en ce que** le mélange caoutchouteux d'ancrage (10) comporte au moins un élastomère synthétique compris dans le groupe des SBR et des BR avec une proportion totale d'élastomère synthétique supérieure à 50% de la masse totale d'élastomères.

**23.** Ensemble monté pour avion selon l'une des revendications précédentes, **caractérisé en ce que** le mélange caoutchouteux d'ancrage (10) comporte un SBR de Tg comprise entre - 70° et -25°C avec une proportion en masse supérieure à 20% de la masse totale d'élastomères.

**24.** Ensemble monté pour avion selon l'une des revendications 1 à 22, **caractérisé en ce que** le mélange caoutchouteux d'ancrage (10) comporte un BR de Tg comprise entre -110° et -90°C avec une proportion en masse inférieure à 40% de la masse totale d'élastomères.

**25.** Ensemble monté pour avion selon l'une des revendications précédentes, **caractérisé en ce que** le mélange caoutchouteux d'ancrage (10) supporte sans rompre une sollicitation de fluage statique à 150°C sous une contrainte initiale de 2.35 MPa pendant au moins cinq heures.

**26.** Ensemble monté pour avion selon la revendication 25, **caractérisé en ce que** le mélange caoutchouteux d'ancrage (10) a un taux de fluage statique à 150°C sous une contrainte initiale de 2.35 MPa inférieur à $2.10^{-3}$ mn$^{-1}$ entre trois et cinq heures.

**27.** Ensemble monté pour avion selon l'une des revendications précédentes, **caractérisé en ce que** le mélange caoutchouteux d'ancrage (10) a un taux de réversion après 10 mn à 197°C inférieur à 10% et de préférence inférieur à 5%.

**28.** Ensemble monté pour avion selon l'une des revendications précédentes, le pneumatique (1, 20) comprenant notamment une armature de carcasse (5, 24, 25), **caractérisé en ce que** les éléments de renforcement de la structure de carcasse du pneumatique sont disposés selon une orientation radiale.

**29.** Ensemble monté pour avion selon l'une des revendications précédentes, dans lequel l'armature de sommet (14, 41) du pneumatique comprend au moins un bloc de travail avec au moins deux couches de renforts parallèles dans chaque couche, orientés sensiblement circonférentiellement et de haut module d'élasticité.

**30.** Ensemble monté pour avion selon la revendication 29, dans lequel, ledit sommet comprenant une zone centrale et deux zones latérales, ledit bloc de travail comprend en plus deux couches d'éléments de renforcement de haut module d'élasticité, orientés sensiblement circonférentiellement, disposées axialement de part et d'autre du plan médian du pneumatique dans les zones latérales dudit sommet.

**31.** Ensemble monté pour avion selon la revendication 30, dans lequel lesdites deux couches d'éléments de renforcement de haut module d'élasticité dudit bloc de travail sont disposées radialement à l'intérieur desdites deux couches de renforts orientés circonférentiellement dudit bloc de travail.

**32.** Ensemble monté pour avion selon l'une des revendications 29 à 31, dans lequel ledit bloc de travail comprend en plus deux couches de renforts, parallèles entre eux dans chaque couche et croisés d'une couche à la suivante en faisant avec la direction circonférentielle un angle $\alpha$, compris entre 5° et 35°, lesdits renforts ayant un haut module d'élasticité.

**33.** Ensemble monté pour avion selon l'une des revendications 29 à 32, dans lequel ladite armature de sommet (14, 41) comprend en plus, disposé radialement extérieurement relativement audit bloc de travail, une couche de protection s'étendant axialement au-delà de la largeur axiale de ladite ou desdites couches de renforts de haut module d'élasticité.

**FIG. 1**

FIG. 2

**FIG. 3**

FIG. 4

FIG. 5

FIG. 6

FIG. 7a

**FIG. 7b**

**FIG. 7c**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0582196 A
- US 4832102 A
- WO 0200456 A
- EP 0751015 A
- WO 02085646 A
- FR 0209355
- EP 242840 A
- EP 822047 A
- WO 9747463 A
- EP 0718090 A